# EUROPÄISCHE PATENTANMELDUNG

(11) **EP 3 501 702 A1**
(43) Veröffentlichungstag der Anmeldung: **26.06.2019**
(21) Anmeldenummer: 17209398.1
(22) Anmeldetag: 21.12.2017
(51) Int. Cl.: B23B 51/04, B23P 15/28, B21D 39/04, B23D 65/00, B28D 1/04

(54) **VERFAHREN ZUR HERSTELLUNG EINES SCHNEIDABSCHNITTES FÜR EINE BOHRKRONE**

(71) Anmelder: HILTI Aktiengesellschaft, 9494 Schaan (LI)
(72) Erfinder: Schroeder, Florian, 7304 Maienfeld (CH); Domani, Guenter, 88138 Weissensberg (DE); Rong, Pingyan, 6800 Feldkirch (AT)
(74) Vertreter: Hilti Aktiengesellschaft Corporate Intellectual Property

(57) **Zusammenfassung**

Verfahren zur Herstellung eines Schneidabschnittes aus einem geschlossenen Rohrelement (14), das in Form eines Hohlzylinders ausgebildet ist, und einem oder mehreren Bohrsegmenten (16), die mit dem geschlossenen Rohrelement (14) verbunden werden.

## Beschreibung

### Technisches Gebiet

Die vorliegende Erfindung betrifft ein Verfahren zur Herstellung eines Schneidabschnittes für eine Bohrkrone gemäß dem Oberbegriff des Anspruchs 1.

### Stand der Technik

WO 2014/096359 A1 offenbart einen Schneidabschnitt für eine Bohrkrone, der mit einem Bohrschaftabschnitt der Bohrkrone über eine lösbare Verbindungseinrichtung verbindbar ist. Dabei ist die lösbare Verbindungseinrichtung als kombinierte Steck-Dreh-Verbindung ausgebildet. Als "Steck-Dreh-Verbindung" werden lösbare Verbindungen zwischen einem ersten und zweiten Verbindungselement bezeichnet, die in einer Richtung eine Steckverbindung bilden und zusätzlich über eine Drehverbindung verbunden werden. Der Schneidabschnitt umfasst eine oder mehrere Bohrsegmente, einen Ringabschnitt, ein äusseres Steckelement und eine ringförmige Anschlagschulter am Übergang vom Ringabschnitt zum äusseren Steckelement.

Schneidabschnitte, die mit einer kombinierten Steck-Dreh-Verbindung verbindbar sind, werden unter dem Produktnamen "Hilti DD X-CM" vertrieben. Die Schneidabschnitte "Hilti DD X-CM" umfassen mehrere Bohrsegmente, einen Ringabschnitt und ein äusseres Steckelement, wobei sich am Übergang vom Ringabschnitt zum äusseren Steckelement eine ringförmige Anschlagschulter für die Kraftübertragung befindet. Die Drehmomentübertragung erfolgt mithilfe von Stiftelementen, die mit schlitzförmigen Ausnehmungen im äusseren Steckelement zusammenwirken. Die Schneidabschnitte "Hilti DD X-CM" werden aus einem geschlossenen Rohrelement gefertigt. Dabei wird die ringförmige Anschlagschulter durch Drehbearbeitung erzeugt und die schlitzförmigen Ausnehmungen werden durch Fräsbearbeitung erzeugt.

Nachteilig am Aufbau der bekannten Schneidabschnitte "Hilti DD X-CM" sind der hohe Fertigungsaufwand durch die Drehbearbeitung der ringförmigen Anschlagschulter und die Fräsbearbeitung der schlitzförmigen Ausnehmungen. Ausserdem ist die Materialauswahl für den Ringabschnitt und das äussere Steckelement eingeschränkt. Da die Schneidabschnitte "Hilti DD X-CM" aus einem geschlossenen Rohrelement gefertigt werden, muss hinsichtlich der Anforderungen an den Schneidabschnitt bezüglich Kraftübertragung, Drehmomentübertragung und Zugbelastungen beim Entfernen einer verklemmten Bohrkrone ein Kompromiss bei der Materialauswahl getroffen werden.

### Darstellung der Erfindung

Die Aufgabe der vorliegenden Erfindung besteht darin, bei einem Verfahren zur Herstellung eines Schneidabschnittes für eine Bohrkrone den Fertigungsaufwand bei der Herstellung des Schneidabschnittes zu reduzieren. Ausserdem soll die Funktionalität des Schneidabschnittes beim Bohren mit der Bohrkrone im Hinblick auf Kraftübertragung, Drehmomentübertragung und/oder Zugbelastungen beim Entfernen einer verklemmten Bohrkrone verbessert werden.

Diese Aufgabe wird bei dem eingangs genannten Verfahren zur Herstellung eines Schneidabschnittes für eine Bohrkrone erfindungsgemäß durch die Merkmale des unabhängigen Anspruchs 1 gelöst. Vorteilhafte Weiterbildungen sind in den abhängigen Ansprüchen angegeben.

Der mit dem erfindungsgemäßen Verfahren hergestellte Schneidabschnitt für eine Bohrkrone wird mit einem Bohrschaftabschnitt der Bohrkrone über eine lösbare Verbindungseinrichtung verbunden. Das Verfahren zur Herstellung eines Schneidabschnittes für eine Bohrkrone ist gekennzeichnet durch die Verfahrenschritte:
▪ ein erstes Blechteil, das eine erste Höhe zwischen ersten Stirnflächen, eine erste Länge zwischen ersten Stosskanten und eine erste Blechdicke aufweist, wird gefertigt,
▪ ein zweites Blechteil, das eine zweite Höhe zwischen zweiten Stirnflächen, eine zweite Länge zwischen zweiten Stosskanten und eine zweite Blechdicke aufweist, wird gefertigt, wobei die erste Höhe kleiner als die zweite Höhe ist und die erste Länge kleiner als die zweite Länge ist,
▪ das erste und zweite Blechteil werden zueinander ausgerichtet, wobei das erste Blechteil auf dem zweiten Blechteil angeordnet wird,
▪ das erste und zweite Blechteil werden im ausgerichteten Zustand miteinander zu einem Doppelblechteil verbunden,
▪ das Doppelblechteil wird zu einem offenen Rohrelement umgeformt, wobei das erste Blechteil auf der Innenseite des offenen Rohrelementes angeordnet wird,
▪ das offene Rohrelement wird zumindest an den zweiten Stosskanten des zweiten Blechteils zu einem geschlossenen Rohrelement verbunden und
▪ ein oder mehrere Bohrsegmente werden mit dem geschlossenen Rohrelement verbunden.

Der Schneidabschnitt, der mithilfe des erfindungsgemässen Verfahrens hergestellt wird, umfasst ein geschlossenes Rohrelement, das aus einem ersten Rohrelement und einem zweiten Rohrelement zusammengesetzt ist, und mindestens ein Bohrsegment. Das geschlossene Rohrelement wird aus einem ersten Blechteil und einem zweiten Blechteil hergestellt. Das erste Blechteil ist als ebenes Blechteil einer ersten Blechdicke ausgebildet, das eine erste Höhe zwischen ersten Stirnflächen und eine erste Länge zwischen ersten Stosskanten aufweist. Das zweite Blechteil ist als ebenes Blechteil einer zweiten Blechdicke ausgebildet, das eine zweite Höhe zwischen zweiten Stirnflächen und eine zweite Länge zwischen zweiten Stosskanten aufweist. Das erste Blechteil und das zweite Blechteil werden zueinander ausgerichtet und im ausgerichteten Zustand miteinander zu einem Doppelblechteil verbunden. Das Doppelblechteil wird zu einem offenen Rohrelement umgeformt und zumindest an den zweiten Stosskanten des zweiten Blechteils zum geschlossenen Rohrelement verbunden.

Der Schneidabschnitt ist so aufgebaut, dass die Kraftübertragung auf den Schneidabschnitt über das erste ohrelement und die Drehmomentübertragung auf den Schneidabschnitt über das zweite Rohrelement erfolgt. Die erste obere Stirnfläche des ersten Rohrelementes bildet eine ringförmige Anschlagschulter, die zur Kraftübertragung verwendet wird. Ein Bohrschaftabschnitt überträgt die Kraft mittels einer ringförmigen Stirnfläche auf die ringförmige Anschlagschulter. Die Drehmomentübertragung erfolgt beispielsweise über Stiftelemente des Bohrschaftabschnittes, die mit schlitzförmigen Ausnehmungen im zweiten geschlossenen Rohrelement zusammenwirken. Durch die Trennung des Schneidabschnittes in das erste Rohrelement und das zweite Rohrelement können die unterschiedlichen Anforderungen an den Schneidabschnitt im Hinblick auf die Kraftübertragung und Drehmomentübertragung berücksichtigt werden.

Durch die Trennung des Schneidabschnittes in das erste Rohrelement und das zweite Rohrelement kann ausserdem der Fertigungsaufwand für die Herstellung des Schneidabschnittes reduziert werden. Die erste obere Stirnfläche bildet die ringförmige Anschlagschulter für die Kraftübertragung, so dass eine Drehbearbeitung entfällt. Das erste Rohrelement und das zweite Rohrelement sind als Hohlzylinder mit kreisringförmigen Querschnitten ausgebildet und weisen eine konstante Materialstärke auf.

Bevorzugt wird das geschlossene Rohrelement zusätzlich an den ersten Stosskanten des ersten Blechteils verbunden. Besonders bevorzugt wird das offene Rohrelement gleichzeitig an den ersten Stosskanten des ersten Blechteils und den zweiten Stosskanten des zweiten Blechteils verbunden.

Bevorzugt wird im zweiten Blechteil mindestens eine schlitzförmige Ausnehmung erstellt, wobei die mindestens eine schlitzförmige Ausnehmung einen Querschlitz und einen Verbindungsschlitz umfasst und der Verbindungsschlitz den Querschlitz mit der zweiten oberen Stirnfläche des zweiten geschlossenen Rohrelementes verbindet. Die mindestens eine schlitzförmige Ausnehmung ist Teil der lösbaren Verbindungseinrichtung, die den Schneidabschnitt mit einem Bohrschaftabschnitt der Bohrkrone verbindet. Die schlitzförmige Ausnehmung ist in T-Form oder L-Form ausgebildet und ermöglicht im verbundenen Zustand der Bohrkrone eine Relativbewegung zwischen dem Schneidabschnitt und dem Bohrschaftabschnitt. Durch die Relativbewegung zwischen dem Schneidabschnitt und dem Bohrschaftabschnitt kann ein verklemmter Schneidabschnitt aus dem Untergrund gelöst werden.

Besonders bevorzugt wird im zweiten Blechteil mindestens eine Quernut erstellt, wobei die mindestens eine Quernut in Höhe des Verbindungsschlitzes der mindestens einen schlitzförmigen Ausnehmung angeordnet wird. Die mindestens eine Quernut ist Teil der lösbaren Verbindungseinrichtung, die den Schneidabschnitt mit einem Bohrschaftabschnitt der Bohrkrone verbindet. Die Breite der Quernut ist grösser oder gleich der Breite des Querschlitzes der mindestens einen schlitzförmigen Ausnehmung. In die Quernut des Schneidabschnittes greift eine passende Quernase eines Bohrschaftabschnittes ein. Die Quernut und Quernase bilden eine zusätzliche formschlüssige Verbindung, die verhindert, dass die Steck-Dreh-Verbindung beim Lösen einer verklemmten Bohrkrone unbeabsichtigt geöffnet wird und der Bohrschaftabschnitt ohne Schneidabschnitt aus dem Untergrund entfernt wird.

Bevorzugt wird im ersten Blechteil mindestens eine Innenvertiefung erstellt, die sich über die erste Hohlzylinderhöhe erstreckt. Die mindestens eine Innenvertiefung in der ersten inneren Mantelfläche kann einen Transportkanal für eine Kühl- und Spülflüssigkeit bilden und ermöglicht die Ausbildung von Schneidabschnitten mit geringen Innenüberständen der Bohrsegmente auf der Innenseite des Schneidabschnittes. Die Breite, Tiefe, Form und/oder Anzahl der mindestens einen Innenvertiefung werden an die benötigte Flüssigkeitsmenge der Kühl- und Spülflüssigkeit angepasst.

In einer bevorzugten Weiterentwicklung wird das erste Blechteil aus einem ersten Material und das zweite Blechteil aus einem zweiten Material hergestellt. Der mit dem erfindungsgemäßen Verfahren hergestellte Schneidabschnitt ist so aufgebaut, dass die Kraftübertragung auf den Schneidabschnitt über das erste Rohrelement und die Drehmomentübertragung auf den Schneidabschnitt über das zweite Rohrelement erfolgt. Durch die Trennung des Schneidabschnittes in das erste Rohrelement und das zweite Rohrelement kann die Auswahl des ersten Materials und des zweiten Materials an die unterschiedlichen Anforderungen an den Schneidabschnitt im Hinblick auf die Kraftübertragung und Drehmomentübertragung angepasst werden. Ausserdem kann das zweite Material im Hinblick auf Zugbelastungen beim Entfernen einer verklemmten Bohrkrone angepasst werden.

Bevorzugt wird das zweite Blechteil an den zweiten Stosskanten mit mindestens einem zweiten positiven Formschlusselement und mindestens einem entsprechenden zweiten negativen Formschlusselement ausgebildet, wobei das mindestens eine zweite positive Formschlusselement und das mindestens eine zweite negative Formschlusselement formschlüssig verbunden werden. Die Verbindung der zweiten Stosskanten über zweite Formschlusselemente hat den Vorteil, dass kein Wärmeeintrag in das zweite Rohrelement erfolgt, der zu Spannungen im zweiten Rohrelement führen kann.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: eine Bohrkrone mit einem Schneidabschnitt und einem Bohrschaftabschnitt, die über eine lösbare Verbindungseinrichtung verbindbar sind, in einem unverbundenen Zustand der Bohrkrone (FIG. 1A) und in einem verbundenen Zustand der Bohrkrone (FIG. 1 B);
- FIGN. 2A-C: den Schneidabschnitt der FIG. 1 bestehend aus einem geschlossenen Rohrelement und mehreren Bohrsegmenten in einem Längsschnitt entlang der Schnittlinie A-A in FIG. 1A; und
- FIGN. 3A-B: ein erstes Blechteil (FIG. 3A) und ein zweites Blechteil (FIG. 3B), die zu einem Doppelblechteil verbunden werden (FIG. 3C).

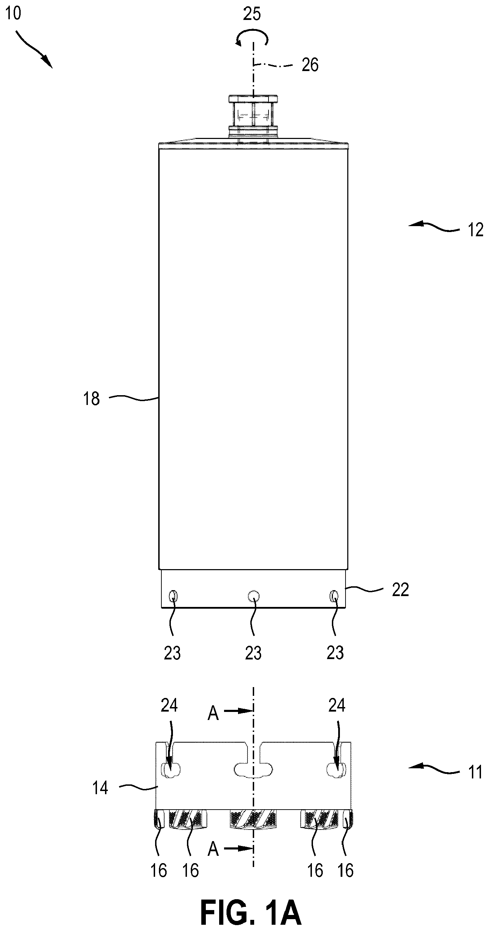

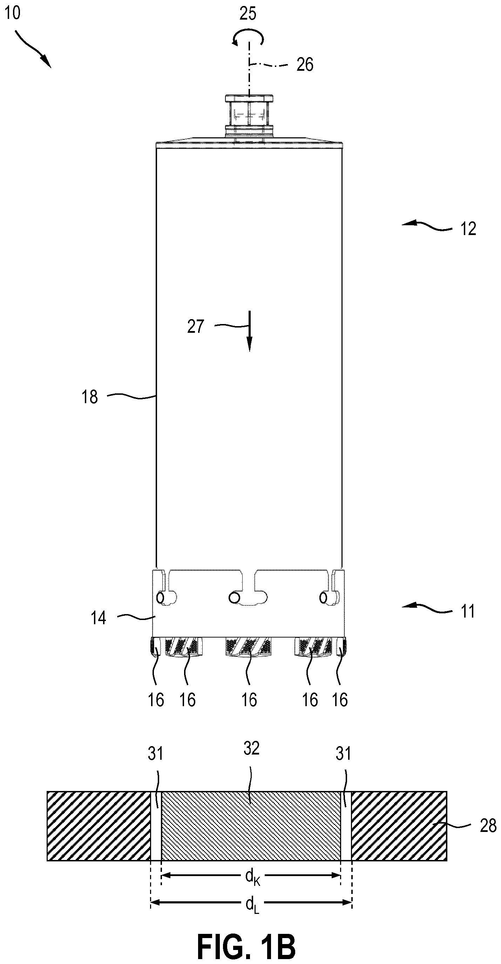

**FIGN. 1A****, B** zeigen eine Bohrkrone **10,** die einen Schneidabschnitt **11** und einen Bohrschaftabschnitt **12** umfasst, wobei der Schneidabschnitt 11 und der Bohrschaftabschnitt 12 über eine lösbare Verbindungseinrichtung **13** verbindbar sind. Dabei zeigt FIG. 1A den Schneidabschnitt 11 und Bohrschaftabschnitt 12 in einem unverbundenen Zustand der Bohrkrone und FIG. 1B zeigt den Schneidabschnitt 11 und Bohrschaftabschnitt 12 in einem verbundenen Zustand der Bohrkrone.

Der Schneidabschnitt 11 umfasst ein geschlossenes Rohrelement **14** und mehrere Bohrsegmente **16,** die mit dem geschlossenen Rohrelement 14 verbunden sind. Der Schneidabschnitt 11 wird mithilfe des erfindungsgemässen Verfahrens zur Herstellung eines Schneidabschnittes hergestellt. Das Rohrelement 14 ist aus zwei ebenen Blechteilen hergestellt, die miteinander verbunden werden und zu einem offenen Rohrelement umgeformt werden. Das offene Rohrelement wird durch Verbinden der Stosskanten zu einem geschlossenen Rohrelement.

Die Bohrsegmente 16 sind ringförmig angeordnet und bilden einen Bohrring mit Zwischenräumen. Der Schneidabschnitt 11 kann anstatt mehrerer Bohrsegmente 16 auch ein einzelnes als geschlossener Bohrring ausgebildetes Bohrsegment aufweisen. Die Bohrsegmente 16 können mit dem geschlossenen Rohrelement 14 verschweißt, verlötet, verschraubt oder in einer anderen geeigneten Befestigungsart am geschlossenen Rohrelement 14 befestigt werden. Der Bohrschaftabschnitt 12 umfasst einen rohrförmigen Bohrschaft **17,** einen Deckel **18** und ein Einsteckende **19,** über das die Bohrkrone 10 in einer Werkzeugaufnahme eines Kernbohrgerätes befestigt wird.

Die lösbare Verbindungseinrichtung 13 ist in Form einer kombinierten Steck-Dreh-Verbindung ausgebildet, wie sie in WO 2014/096359 A1 offenbart ist. Die lösbare Verbindungseinrichtung 13 umfasst ein erstes Steckelement **21,** das in den Schneidabschnitt 11 integriert ist, und ein zweites Steckelement **22,** das in den Bohrschaftabschnitt 12 integriert ist. Das erste und zweite Steckelement 21, 22 bilden eine Steckverbindung und werden zusätzlich über eine Drehverbindung gesichert. Die Drehverbindung umfasst mehrere Stiftelemente **23,** die in schlitzförmige Ausnehmungen **24** eingeführt werden. Die Stiftelemente 23 sind an einer Außenseite des zweiten Steckelementes 22 befestigt und die schlitzförmigen Ausnehmungen 24 sind im ersten Steckelement 21 vorgesehen. Der Schneidabschnitt 11 lässt sich vom Bediener einfach und schnell mit dem Bohrschaftabschnitt 12 verbinden. Dazu wird der Schneidabschnitt 11 mit dem ersten Steckelement 21 so auf das zweite Steckelement 22 des Bohrschaftabschnittes 12 gesteckt, dass die Stiftelemente 23 in den schlitzförmigen Ausnehmungen 24 angeordnet sind.

Im Bohrbetrieb wird die Bohrkrone 10 von einem Kernbohrgerät in einer Drehrichtung **25** um eine Drehachse **26** angetrieben, wobei die Drehachse 26 mit einer Längsachse des rohrförmigen Bohrschaftes 17 zusammenfällt. Während der Drehung der Bohrkrone 10 um die Drehachse 26 wird die Bohrkrone 10 entlang einer Vorschubrichtung **27** in ein Werkstück **28** bewegt, wobei die Vorschubrichtung 27 parallel zur Drehachse 26 verläuft. Die Bohrkrone 10 erzeugt im Werkstück 28 ein Bohrloch **31** mit einem Bohrlochdurchmesser **d_{L}** und einen Bohrkern **32** mit einem Kerndurchmesser **d_{K}.** Die Bohrsegmente 15 bilden einen Bohrring mit einem Außendurchmesser, der dem Bohrlochdurchmesser d_{L} entspricht, und einem Innendurchmesser, der dem Kerndurchmesser d_{K} entspricht.

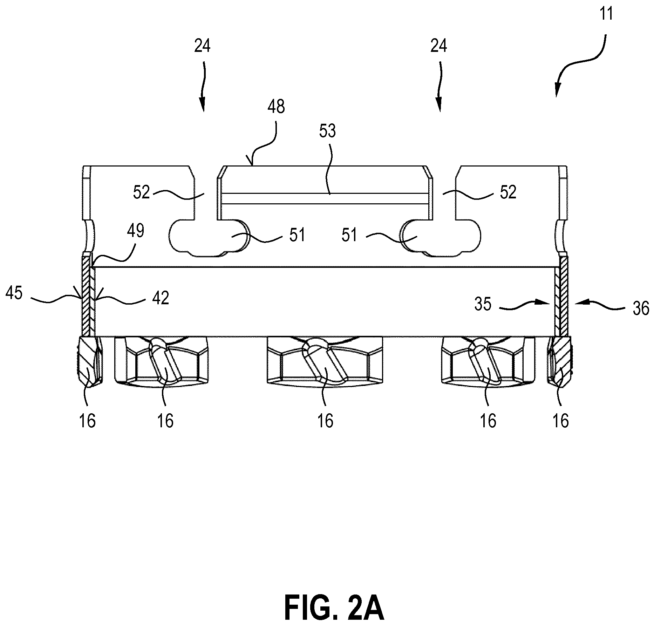

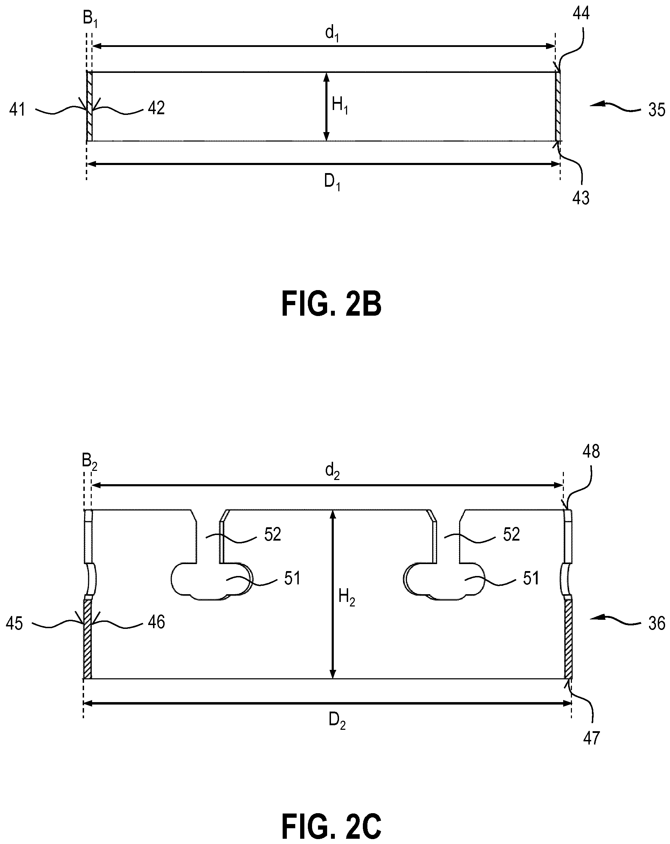

**FIGN. 2A-C** zeigen den Schneidabschnitt 11 der FIG. 1 mit dem geschlossenen Rohrelement 14 und den Bohrsegmenten 16 in einem Längsschnitt entlang der Schnittlinie A-A in FIG. 1A. Das Rohrelement 14 ist aus einem ersten Rohrelement **35** (FIG. 2B) und einem zweiten Rohrelement **36** (FIG. 2C) zusammengesetzt.

Das erste Rohrelement 35 ist in Form eines ersten Hohlzylinders mit einer kreisringförmigen Querschnittsfläche ausgebildet. Das erste Rohrelement 35 umfasst eine erste äussere Mantelfläche **41,** eine erste innere Mantelfläche **42,** eine erste untere Stirnfläche **43** und eine erste obere Stirnfläche **44.** Die Abmessungen des ersten Rohrelementes 35 sind durch eine erste Hohlzylinderhöhe **H₁,** einen ersten Innendurchmesser **d₁** und einen ersten Aussendurchmesser **D₁** definiert. Die Breite des ersten Rohrelementes 35 ergibt sich als halbe Differenz des ersten Aussendurchmessers D₁ und des ersten Innendurchmessers d₁ und wird als erste Breite **B₁** bezeichnet.

Das zweite Rohrelement 36 ist in Form eines zweiten Hohlzylinders mit einer kreisringförmigen Querschnittsfläche ausgebildet. Das zweite Rohrelement 36 umfasst eine zweite äussere Mantelfläche **45,** eine zweite innere Mantelfläche **46,** eine zweite untere Stirnfläche **47** und eine zweite obere Stirnfläche **48.** Die Abmessungen des zweiten Rohrelementes 36 sind durch eine zweite Hohlzylinderhöhe **H₂,** einen zweiten Innendurchmesser **d₂** und einen zweiten Aussendurchmesser **D₂** definiert. Die Breite des zweiten Rohrelementes 36 ergibt sich als halbe Differenz des zweiten Aussendurchmessers D₂ und des zweiten Innendurchmessers d₂ und wird als zweite Breite **B₂** bezeichnet.

Die erste untere Stirnfläche 43 des ersten Rohrelementes 35 und die zweite untere Stirnfläche 47 des zweiten Rohrelementes 36 sind bündig ausgerichtet. Die bündige Ausrichtung der ersten unteren Stirnfläche 43 und der zweiten unteren Stirnfläche 47 hat den Vorteil, dass eine breite Anbindungsfläche für die Bohrsegmente 16 entsteht, an der die Bohrsegmente 16 mit dem ersten Rohrelement 35 und dem zweiten Rohrelement 36 verbunden werden können.

Der Schneidabschnitt 11 ist so aufgebaut, dass die Kraftübertragung vom Bohrschaftabschnitt 12 auf den Schneidabschnitt 11 über das erste Rohrelement 35 erfolgt und die Drehmomentübertragung vom Bohrschaftabschnitt 12 auf den Schneidabschnitt 11 über das zweite Rohrelement 36 erfolgt. Die erste obere Stirnfläche 44 des ersten Rohrelementes 35 bildet an der Innenseite des Schneidabschnittes 11 eine ringförmige Anschlagschulter **49** für die Kraftübertragung von einem verbundenen Bohrschaftabschnitt. Die Drehmomentübertragung vom Bohrschaftabschnitt 12 auf den Schneidabschnitt 11 erfolgt über die Stiftelemente 23 und die schlitzförmigen Ausnehmungen 24. Das zweite Rohrelement 36 des Schneidabschnittes 11 weist an der zweiten oberen Stirnfläche 48 mehrere schlitzförmige Ausnehmungen 24 auf. Die schlitzförmigen Ausnehmungen 24 umfassen jeweils einen Querschlitz **51** und einen Verbindungsschlitz **52,** wobei der Verbindungsschlitz 52 den Querschlitz 51 mit der zweiten oberen Stirnfläche 48 verbindet.

Das erste Rohrelement 35 kann aus einem ersten Material und das zweite Rohrelement 36 aus einem zweiten Material hergestellt werden. Durch die Trennung des Schneidabschnittes 11 in das erste Rohrelement 35 und das zweite Rohrelement 36 kann die Auswahl des ersten Materials und des zweiten Materials an die unterschiedlichen Anforderungen des ersten Rohrelementes 35 und des zweiten Rohrelementes 36 angepasst werden.

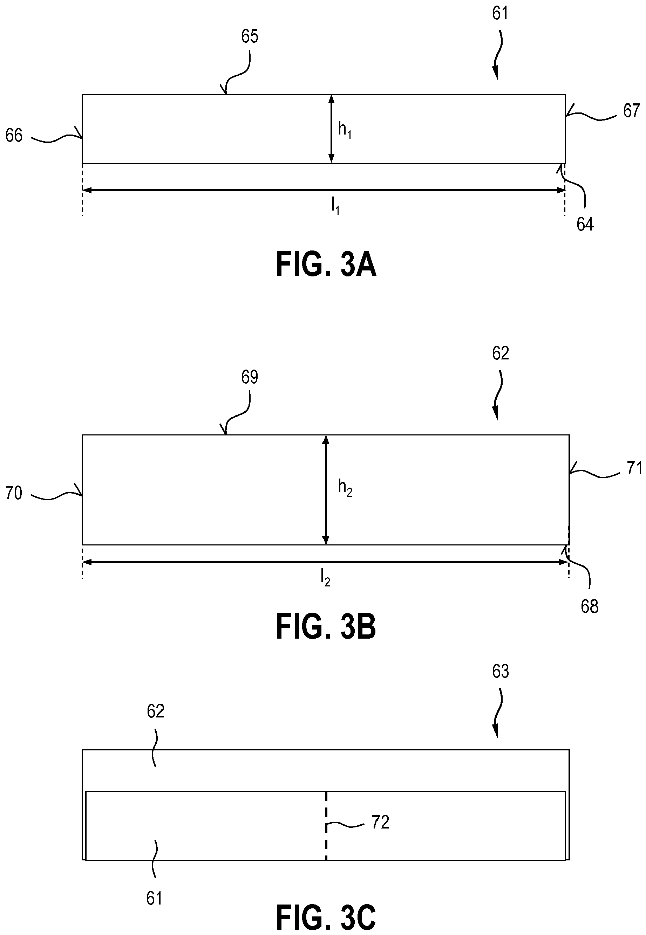

**FIGN. 3A-C** zeigen ein erstes Blechteil **61** (FIG. 3A) und ein zweites Blechteil **62** (FIG. 3B), die zu einem Doppelblechteil **63** verbunden werden. Das geschlossene Rohrelement 14 des Schneidabschnittes 11 wird mithilfe des erfindungsgemässen Verfahrens aus dem ersten Blechteil 61 und dem zweiten Blechteil 62 hergestellt.

Das erste Blechteil 61 ist als ebenes Blechteil einer ersten Blechdicke **b₁** ausgebildet, das eine erste Höhe **h₁** zwischen ersten Stirnflächen **64, 65** und eine erste Länge **l₁** zwischen ersten Stosskanten **66, 67** aufweist. Das zweite Blechteil 62 ist als ebenes Blechteil einer zweiten Blechdicke **b₂** ausgebildet, das eine zweite Höhe **h₂** zwischen zweiten Stirnflächen **68, 69** und eine zweite Länge **l₂** zwischen zweiten Stosskanten **70, 71** aufweist.

Das erste Blechteil 61 und das zweite Blechteil 62 werden zueinander ausgerichtet, wobei das erste Blechteil 61 auf dem zweiten Blechteil 62 angeordnet wird. Im Ausführungsbeispiel werden die erste untere Stirnfläche 64 und die zweite untere Stirnfläche 68 bündig ausgerichtet. Das erste und zweite Blechteil 61, 62 werden im ausgerichteten Zustand mithilfe einer Schweissnaht **72** miteinander zum Doppelblechteil 63 verbunden. Die Schweissnaht wird im Bereich der Mitte des ersten und zweiten Blechteils 61, 62 platziert.

## Patentansprüche

1. Verfahren zur Herstellung eines Schneidabschnittes (11) für eine Bohrkrone (10), wobei der Schneidabschnitt (11) über eine lösbare Verbindungseinrichtung (13) mit einem Bohrschaftabschnitt (12) der Bohrkrone (10) verbunden wird, **gekennzeichnet durch** die Verfahrenschritte:
▪ ein erstes Blechteil (61), das eine erste Höhe (h₁) zwischen ersten Stirnflächen (64, 65), eine erste Länge (l₁) zwischen ersten Stosskanten (66, 67) und eine erste Blechdicke (b₁) aufweist, wird gefertigt,
▪ ein zweites Blechteil (62), das eine zweite Höhe (h₂) zwischen zweiten Stirnflächen (68, 69), eine zweite Länge (l₂) zwischen zweiten Stosskanten (70, 71) und eine zweite Blechdicke (b₂) aufweist, wird gefertigt, wobei die erste Höhe (h₁) kleiner als die zweite Höhe (h₂) ist und die erste Länge (l₁) kleiner als die zweite Länge (l₂) ist,
▪ das erste und zweite Blechteil (61, 62) werden zueinander ausgerichtet, wobei das erste Blechteil (61) auf dem zweiten Blechteil (62) angeordnet wird,
▪ das erste Blechteil (61) und zweite Blechteil (62) werden im ausgerichteten Zustand miteinander zu einem Doppelblechteil (63) verbunden,
▪ das Doppelblechteil (63) wird zu einem offenen Rohrelement umgeformt, wobei das erste Blechteil (61) auf der Innenseite des offenen Rohrelementes angeordnet wird,
▪ das offene Rohrelement wird zumindest an den zweiten Stosskanten (70, 71) des zweiten Blechteils (62) zu einem geschlossenen Rohrelement (14) verbunden und
▪ ein oder mehrere Bohrsegmente (16) werden mit dem geschlossenen Rohrelement (14) verbunden.

2. Verfahren nach Anspruch 1, **dadurch gekennzeichnet, dass** das geschlossene Rohrelement (14) zusätzlich an den ersten Stosskanten (66, 67) des ersten Blechteils (61) verbunden wird.

3. Verfahren nach Anspruch 2, **dadurch gekennzeichnet, dass** das offene Rohrelement gleichzeitig an den ersten Stosskanten (66, 67) des ersten Blechteils (61) und den zweiten Stosskanten (70, 71) des zweiten Blechteils (62) verbunden wird.

4. Verfahren nach Anspruch 1, **dadurch gekennzeichnet, dass** im zweiten Blechteil (62) mindestens eine schlitzförmige Ausnehmung (24) erstellt wird, wobei die mindestens eine schlitzförmige Ausnehmung (24) einen Querschlitz (51) und einen Verbindungsschlitz (52) aufweist und der Verbindungsschlitz (52) den Querschlitz (51) mit der zweiten Stirnfläche (69) des zweiten Blechteils (62) verbindet.

5. Verfahren nach Anspruch 4, **dadurch gekennzeichnet, dass** im zweiten Blechteil (62) mindestens eine Quernut (53) erstellt wird, wobei die mindestens eine Quernut (53) in Höhe des Verbindungsschlitzes (52) angeordnet wird.

6. Verfahren nach Anspruch 1, **dadurch gekennzeichnet, dass** im ersten Blechteil (61) mindestens eine Innenvertiefung erstellt wird, die sich über die erste Höhe (h₁) des ersten Blechteils (61) erstreckt.

7. Verfahren nach einem der Ansprüche 1 bis 6, **dadurch gekennzeichnet, dass** das erste Blechteil (61) aus einem ersten Material und das zweite Blechteil (71) aus einem zweiten Material hergestellt wird.

8. Verfahren nach einem der Ansprüche 1 bis 7, **dadurch gekennzeichnet, dass** das zweite Blechteil (62) an den zweiten Stosskanten (70, 71) mit mindestens einem zweiten positiven Formschlusselement und mindestens einem entsprechenden zweiten negativen Formschlusselement ausgebildet wird, wobei das mindestens eine zweite positive Formschlusselement und das mindestens eine zweite negative Formschlusselement formschlüssig verbunden werden.
